# EUROPÄISCHE PATENTANMELDUNG

(11) **EP 3 761 558 A1**
(43) Veröffentlichungstag der Anmeldung: **06.01.2021**
(21) Anmeldenummer: 19184090.9
(22) Anmeldetag: 03.07.2019
(51) Int. Cl.: H04L 9/32, H04L 9/08

(54) **ERZEUGEN EINES SCHLÜSSELPAARES EINES HARDWAREELEMENTS UND EINES ZUGEHÖRIGEN ZERTIFIKATES**

(71) Anmelder: Siemens Aktiengesellschaft, 80333 München (DE)
(72) Erfinder: Bußer, Jens-Uwe, 85579 Neubiberg (DE); Brockhaus, Hendrik, 85579 Unterbiberg (DE); Seltzsam, Stefan, 85653 Aying (DE)

(57) **Zusammenfassung**

Die Erfindung gibt ein Verfahren zum Erzeugen eines Schlüsselpaares eines Hardwareelements und eines zugehörigen Zertifikates,
wobei das Schlüsselpaar einen privaten Schlüssel und einen öffentlichen Schlüssel aufweist,
wobei der private Schlüssel nicht auslesbar ist und wobei der öffentliche Schlüssel auslesbar ist und in einer Datenbank gespeichert wird, und
wobei mindestens eine erste Infrastrukturkomponente Zugriff auf die Datenbank hat,
mit den Schritten in der Reihenfolge:
- Erzeugen (S1) eines Schlüsselpaars auf dem Hardwareelement,
- Auslesen (S2) des öffentlichen Schlüssels aus dem Hardwareelement und Abspeichern (S2) in der Datenbank,
- Einbau (S3) des Hardwareelements in ein technisches Gerät,
- Stellen (S4) eines Zertifizierungsantrages für das technische Gerät durch die erste Infrastrukturkomponente, wobei der Zertifizierungsantrag den öffentlichen Schlüssel und Daten zu dem technischen Gerät aus einer Datenbank enthält und
- Erzeugen und/ oder Bereitstellen (S5) des Zertifikats für das technische Gerät durch eine zweite Infrastrukturkomponente, wobei das Zertifikat den öffentlichen Schlüssel enthält, wobei der öffentliche Schlüssel zu dem privaten Schlüssel des Schlüsselpaars auf dem Hardwareelement gehört,
an.

Die Erfindung gibt außerdem ein Schlüsselverwaltungssystem an.

## Beschreibung

### HINTERGRUND DER ERFINDUNG

### Gebiet der Erfindung

Die vorliegende Erfindung betrifft ein Verfahren zum Erzeugen eines Schlüsselpaares eines Hardwareelements und eines zugehörigen Zertifikates. Die Erfindung betrifft außerdem ein Schlüsselverwaltungssystem

### Beschreibung des Stands der Technik

Immer mehr Produkte (insbesondere elektronische Geräte) werden heutzutage in der Produktion mit einem digitalen Herstellerzertifikat versehen. Dieses Herstellerzertifikat kann dann später beispielsweise als Echtheitsnachweis dienen, und auch zum Bootstrappen weiterer Zertifikate und anderer Security Credentials verwendet werden.

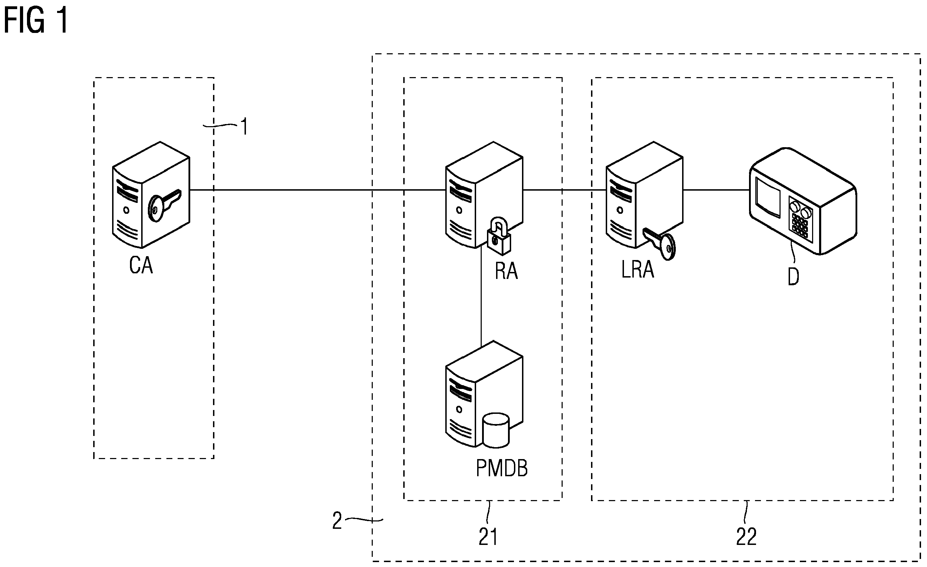

Fig. 1 zeigt die Infrastrukturkomponenten beim Imprinting von Herstellerzertifikaten. Man verwendet für das Imprinting vorzugsweise folgende Infrastrukturkomponenten:
- Lokale Registration Authority LRA, z.B. auf Testrechner (im Fabriknetzwerk 2) am Fließband in der Fabrikhalle 22, stellt Verbindung zum produzierten technischen Gerät D her. Dabei ist zu beachten, dass die Zertifikatsanfrage der Lokale Registration Authority LRA an das technische Gerät D nicht kryptographisch geschützt werden kann. Es sind daher organisatorische und/ oder physikalische Schutzmaßnahmen nötig, um zu verhindern, dass Zertifikatsanfragen verändert oder unautorisiert hinzugefügt werden.
- Registration Authority RA im Fabrik-Serverraum 21 des Fabriknetzwerks 2 bündelt und prüft Anfragen mittels Datenbank (z.B. production management database/ Produktions-Management-Datenbank PMDB), stellt Verbindung zu einer Certification Authority CA her, und speichert Zertifikate in der Produktions-Management-Datenbank PMDB.
- Certification Authority CA im Trustcenter 1 erstellt Zertifikate und Zertifikatswideruflisten (z.B. certificate revocation list (CRL)).

Für die Erstellung von Herstellerzertifikaten (und anderen, nicht-selbstsignierten Zertifikaten) gibt es im Wesentlichen zwei Verfahren:
- Schlüsselpaar und Zertifikat werden außerhalb des Gerätes erzeugt, und in das Gerät eingespielt. Dieses Verfahren wird vor allem dann verwendet, wenn ein Gerät kein eigenes Schlüsselpaar erzeugen kann oder wenn der private Schlüssel an zentraler Stelle hinterlegt werden soll (key escrow Verfahren). Nachteil dieses Verfahrens ist, dass der private Schlüssel auch außerhalb des Gerätes existiert, dort sicher verwahrt, vertraulich zum Gerät transportiert und dann außerhalb sicher gelöscht werden muss.
- Alternativ kann das Schlüsselpaar auch direkt im Gerät erzeugt werden. Der öffentliche Schlüssel wird dann zur Zertifikatserzeugung zur CA transportiert; der private Schlüssel wird nicht transportiert, eine unbeabsichtigte Offenlegung durch Infrastrukturkomponenten oder beim Transport ist daher nicht möglich. Allerdings muss dafür gesorgt werden, dass nur berechtigte Antragssteller (Geräte) ihre Zertifikatsanfragen zur CA senden können, und dass die Anfragen unberechtigter Antragsteller erkannt und abgelehnt werden.

Zum Schutz der Vertraulichkeit und Authentizität / Integrität von Kommunikation verwendet man üblicherweise sichere Übertragungsprotokolle wie TLS und IPsec, für sicheres Zertifikatsmanagement Protokolle wie CMP. Dies ist möglich bei der Kommunikation der Infrastrukturkomponenten (LRA, RA, CA) untereinander, da diese über administrierte Security Credentials (e.g. TLS Zertifikate) verfügen; die LRA kann sich auch gegenüber dem Gerät authentifizieren, wenn ein entsprechendes Root-CA-Zertifikat als Vertrauensanker z. B. in der Firmware des Gerätes vorhanden ist. Allerdings kann sich das Gerät nicht gegenüber der LRA authentifizieren, da es sich beim Imprinting um das initiale Verfahren zur Versorgung des Gerätes mit Security Credentials handelt, und daher noch keine (geräteindividuellen) Credentials für das Aufbauen einer gesicherten Verbindung im Gerät vorhanden sind.

Verschiedene bekannte Lösungen dazu mit unterschiedlichen Vor- und Nachteilen sind im Folgenden beschrieben.
- Von besonderer Bedeutung ist, durch organisatorische Maßnahmen und physikalische Nähe eine gesicherte Verbindung zwischen LRA und Gerät zu ermöglichen. Dies kann beispielsweise dadurch geschehen, dass in der Fabrikhalle (die zusätzlich zutrittsbeschränkt ist) der Bereich, in dem das Imprinting stattfindet, durch spezielle Maßnahmen wie Drahtgitterkäfig, Kameraüberwachung, usw. zusätzlich vor nicht autorisiertem Zutritt zu schützen. Nachteil dieser Maßnahmen sind die recht hohen Kosten für Umsetzung und Betrieb.
- Alternativ bzw. zusätzlich kann in der Firmware (zusätzlich zum Root-CA-Zertifikat) noch ein - vorzugsweise obfuskierter - Gruppenschlüssel vorhanden sein; dieser Schlüssel kann ein symmetrischer Schlüssel (e.g. für AES oder HMAC [RFC2104]) oder ein asymmetrischer privater Schlüssel (e.g. RSA, ECDSA) sein, und ist identisch für alle Geräte, welche die gleiche Firmware erhalten. Mit diesem Schlüssel kann das Gerät sich bzw. seine Zertifikatsanfrage authentifizieren, beispielsweise in einer CMP "initilization request message", die mittels HMAC oder digitaler Signatur geschützt ist, oder durch Aufbau einer TLS-Verbindung, über die EST als Enrollment-Protokoll verwendet wird. Da die Firmware einen vertraulichen Schlüssel enthält, muss sie vertraulich aufbewahrt werden; nach dem Imprinting bzw. bevor das Gerät ausgeliefert wird, sollte dieser Schlüssel dann im Gerät gelöscht oder die Firmware, die den vertraulichen Schlüssel enthält, ausgetauscht werden. Firmware-Versionen, die zum Download angeboten werden, sollten diesen Schlüssel dann ebenfalls nicht enthalten.
- Alternativ zu einem Gruppenschlüssel kann in der Firmware auch ein für jedes Gerät individueller Schlüssel verwendet werden; dies erfordert aber unterschiedliche Firmware-Dateien für die einzelnen Geräte, was fertigungstechnisch ungünstig und unerwünscht ist. Außerdem hat man damit das Problem nur verlagert zur Einspielung der Firmware, wo man dann ja auch gleich einen privaten Schlüssel und ein dazugehöriges Zertifikat einspielen könnte.

Bekannt sind die Protokolle TLS und IPsec zur sicheren (vertraulichen, authentischen und integritätsgeschützten) Kommunikation, sowie zahlreiche darauf aufbauende Protokolle: HTTPS, ftps, SSH, usw.

Bekannt sind u.a. folgende Standards und Protokolle für Zertifikatsmanagement bzw. zum Ausrollen von Zertifikaten:
- Certificate Management Protocol (CMP) [RFC4210]
- Certificate Request Message Format (CRMF) [RFC4211]
- Certificate Management over CMS (CMC) [RFC5273]
- Enrollment over Secure Transport (EST) [RFC7030]

### ZUSAMMENFASSUNG DER ERFINDUNG

Die Aufgabe der Erfindung besteht darin, eine Lösung für eine alternative Vergabe von Zertifikaten auf technischen Geräten anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, die Erzeugung eines Schlüsselpaars zeitlich von der Herstellung des technischen Gerätes und der Zertifikatserzeugung zu trennen.

Die Erfindung beansprucht ein Verfahren zum Erzeugen eines Schlüsselpaares eines Hardwareelements und eines zugehörigen Zertifikates,
wobei das Schlüsselpaar einen privaten Schlüssel und einen öffentlichen Schlüssel aufweist,
wobei der private Schlüssel nicht auslesbar ist und wobei der öffentliche Schlüssel auslesbar ist und in einer Datenbank gespeichert wird, und
wobei mindestens eine erste Infrastrukturkomponente Zugriff auf die Datenbank hat,
mit den Schritten in der Reihenfolge:
- Erzeugen eines Schlüsselpaars auf dem Hardwareelement,
- Auslesen des öffentlichen Schlüssels aus dem Hardwareelement und Abspeichern in der Datenbank,
- Einbau des Hardwareelements in ein technisches Gerät,
- Stellen eines Zertifizierungsantrages für das technische Gerät durch die erste Infrastrukturkomponente, wobei der Zertifizierungsantrag den öffentlichen Schlüssel und Daten zu dem technischen Gerät aus einer Datenbank enthält und
- Erzeugen und/ oder Bereitstellen des Zertifikats für das technische Gerät durch eine zweite Infrastrukturkomponente, wobei das Zertifikat den öffentlichen Schlüssel enthält, wobei der öffentliche Schlüssel zu dem privaten Schlüssel des Schlüsselpaars auf dem Hardwareelement gehört.

Die Erfindung schlägt somit vor, schon vor dem Einbau in ein technisches Gerät in einem sicheren Hardwareelement (zum Beispiel ein "Security Chip") ein Schlüsselpaar z.B. für das (Geräte-) Herstellerzertifikat zu erzeugen. Der private Schlüssel ist dabei nicht auslesbar, sondern nur im Hardwareelement / Chip, der öffentliche Schlüssel wird ausgelesen und in einer Liste in einer sicheren Datenbank gespeichert.

Die Liste mit den öffentlichen Schlüsseln wird einer zweiten Infrastrukturkomponente (z.B. einer Certification Authority (CA)) bzw. einer vorgeschalteten Infrastrukturkomponente (LRA, RA) zur Verfügung gestellt.

Die zweite Infrastrukturkomponente (z.B. eine Certification Authority) bzw. vorgeschaltete Infrastrukturkomponenten (LRA, RA) prüfen dann, ob der in der Zertifikatsanfrage enthaltene öffentliche Schlüssel in der Liste auf der Datenbank enthalten ist, und damit ob das technische Gerät einen zulässigen Security Chip (Hardwareelement) enthält.

Das Stellen des Zertifizierungsantrages für das technische Gerät durch die erste Infrastrukturkomponente kann nach Zusammenbau des technischen Gerätes (z.B. durch Auflöten des Hardwareelements (welches zum Beispiel ein Chip sein kann) auf eine Baugruppe oder Zusammenbau mehrere Baugruppen in einem Gehäuse) erfolgen, beispielsweise in der Endkontrolle in der Fertigung oder später im Feld, wenn das technische Gerät in einer Anlage installiert ist.

Das Bereitstellen des Zertifikats für das technische Gerät kann beispielsweise durch Ausliefern des Zertifikats an das technische Gerät oder durch ein Abspeichern des Zertifikats auf einem Server erfolgen.

In einer weiteren Ausgestaltung kann die erste Infrastrukturkomponente:
- eine einer Certification Authority (CA) vorgeschaltete lokale Registration Authority (LRA) und/ oder
- eine einer Certification Authority (CA) vorgeschaltete Registration Authority (RA) und/ oder
- ein Testrechner
sein.

In einer weiteren Ausgestaltung kann die zweite Infrastrukturkomponente eine Certification Authority (CA) sein. Als Certification Authority kann beispielsweise eine Hersteller-CA zur Erstellung von Herstellerzertifikaten verwendet werden oder eine CA beim Kunden, um kunden- bzw. projektspezifische Zertifikate zu erzeugen.

In einer weiteren Ausgestaltung können die Daten zu dem technischen Gerät nach Herstellung des technischen Gerätes ergänzt werden.

In einer weiteren Ausgestaltung kann das Hardwareelement ein Sicherheitschip sein.

In einer weiteren Ausgestaltung kann das Schlüsselpaar im Hardwareelement bereits vor Herstellung des technischen Gerätes erzeugt werden.

Zum Zeitpunkt der Schlüsselerzeugung gibt es das technische Gerät noch nicht. Das technische Gerät wird nach Erzeugung des Schlüsselpaars hergestellt. Auch ist nicht zwingend eine Bindung des Schlüsselpaars an ein spezielles technisches Gerät einer speziellen Produktfamilie notwendig. Die Bindung an das technische Gerät erfolgt durch das Verbauen/ den Einbau des Hardwareelements und das Ausstellen des Zertifikates (oder das Verknüpfen von Daten in der Datenbank).

Das Erzeugen des Schlüsselpaars auf dem Hardwareelement kann beispielsweise bei der Herstellung des Hardwareelements durch den Hersteller des Hardwareelements erfolgen. In diesem Fall werden die Hardwareelemente zusammen mit einer Liste, in der die öffentlichen Schlüssel der Hardwareelemente verzeichnet sind, an den Hersteller des technischen Gerätes geliefert.

Alternativ kann das Erzeugen des Schlüsselpaars auf dem Hardwareelement bei dem Hersteller des technischen Geräts erfolgen, z.B. solange sich die Hardwareelemente, z.B. Chips, noch auf einer Rolle für elektronische Bauteile befinden und noch nicht auf Baugruppen verlötet sind. Der Hersteller liefert diese Hardwareelemente/ Chips anschließend an die Abteilung, die die Geräte fertigt, oder an einen OEM (Original Equipment Manufacturer) Partner.

In einer weiteren Ausgestaltung kann das Schlüsselpaar für ein Herstellerzertifikat des technischen Gerätes erzeugt werden. In diesem Fall ist das Zertifikat ein Herstellerzertifikat.

In einer weiteren Ausgestaltung kann der Zertifizierungsantrag von der Infrastrukturkomponente mittels eines Zertifikatsmanagementprotokolls über Netzwerk an die Certification Authority übertragen/ transportiert werden. Diese Certification Authority bzw. vorgeschaltete Infrastrukturkomponenten (LRA, RA) prüfen dann, ob der in der Zertifikatsanfrage enthaltene öffentliche Schlüssel in der Liste auf der Datenbank enthalten ist, und damit ob das technische Gerät einen zulässigen Security Chip (Hardwareelement) enthält.

Die Erfindung beansprucht außerdem ein Schlüsselverwaltungssystem. Das Schlüsselverwaltungssystem weist die folgenden Komponenten auf:
- eine Datenbank,
- ein technisches Gerät,
- ein Hardwareelement, das ein Schlüsselpaar aufweist, wobei das Schlüsselpaar einen privaten Schlüssel und einen öffentlichen Schlüssel aufweist, wobei der private Schlüssel nicht auslesbar ist und wobei der öffentliche Schlüssel auslesbar ist und in der Datenbank gespeichert wird,
- mindestens eine erste Infrastrukturkomponente, wobei die Infrastrukturkomponente Zugriff auf die Datenbank hat,
- mindestens eine zweite Infrastrukturkomponente, welche ausgebildet ist, Zertifikate für das technische Gerät zu erzeugen und bereitzustellen,
- ein Zertifizierungsantrag für das technische Gerät, wobei der Zertifizierungsantrag den öffentlichen Schlüssel des Schlüsselpaars und Daten zu dem technischen Gerät enthält und wobei der Zertifizierungsantrag von der ersten Infrastrukturkomponente erzeugt, erweitert und/ oder geprüft wird, indem die erste Infrastrukturkomponente den im Zertifizierungsantrag enthaltenen öffentlichen Schlüssel aus der Datenbank abfragt, und
- ein Zertifikat für das technische Gerät, wobei das Zertifikat durch die zweite Infrastrukturkomponente erzeugt und/ oder bereitgestellt wird, wobei das Zertifikat den öffentlichen Schlüssel enthält, wobei der öffentliche Schlüssel zu dem privaten Schlüssel des Schlüsselpaars auf dem Hardwareelement gehört.

Das Schlüsselverwaltungssystem ist dadurch gekennzeichnet, dass das Schlüsselpaar vor einem Einbau des Hardwareelements in das technische Gerät erzeugt wird.

In einer weiteren Ausgestaltung ist das Schlüsselverwaltungssystem ausgebildet ein erfindungsgemäßes Verfahren auszuführen.

Ein Aspekt der Erfindung besteht darin, die Erzeugung des Schlüsselpaars durch das sichere Speichern des öffentlichen Schlüssels in einer Liste auf einer sicheren Datenbank konzeptionell und zeitlich von der Herstellung / dem Zusammenbau des technischen Gerätes und der Zertifikatserzeugung/ dem Zertifizierungsantrag zu trennen. Dies ist insbesondere möglich, wenn durch Verwendung von Hardwareelementen (Security Chips) der private Schlüssel sicher aufbewahrt und gegen unbefugte Nutzung geschützt ist, und somit das Hardwareelemente bzw. das technische Gerät auch an eventuell weniger vertrauenswürdige Dritte weitergegeben werden kann.

Die Erfindung bietet die folgenden Vorteile:
- Technische Geräte mit Hardwareelementen/ Security Chips können auch lange nach der Fertigung mit Herstellerzertifikaten ausgestattet werden. Diese Herstellerzertifikate können auch Parameter enthalten, die bei der Gerätefertigung noch nicht bekannt waren, z.B. endkundenspezifische Daten.
- Es können zum gleichen Schlüsselpaar mehrere Zertifikate auch von unterschiedlichen CAs erzeugt werden, z.B. von der Hersteller-PKI und von einer Endkunden-PKI.
- Wird eine CA kompromittiert, so können mittels der Liste der öffentlichen Schlüssel neue Zertifikate von einer neu aufgesetzten Ersatz-CA erzeugt und an die technischen Geräte verteilt werden, ohne dass die Geräte dazu ausgebaut und in die Fabrik zurückgebracht werden müssen.
- Bekommt ein Auftragsfertiger (z.B. ein OEM Partner) die Hardwareelemente/ Security Chips vom Geräte-Markeninhaber, der auch selbst die CA/RA betreibt oder der die CA/RA von einem vertrauenswürdigen Dritten betreiben lässt, so kann der Markeninhaber auch den Auftragsfertiger bzgl. die Anzahl der technischen Geräte mit gültigem Herstellerzertifikat überwachen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: Infrastrukturkomponenten beim Imprinting von Herstellerzertifikaten und
- Fig. 2: Ablaufdiagramm des erfindungsgemäßen Verfahrens.

### DETAILLIERTE BESCHREIBUNG DER ERFINDUNG

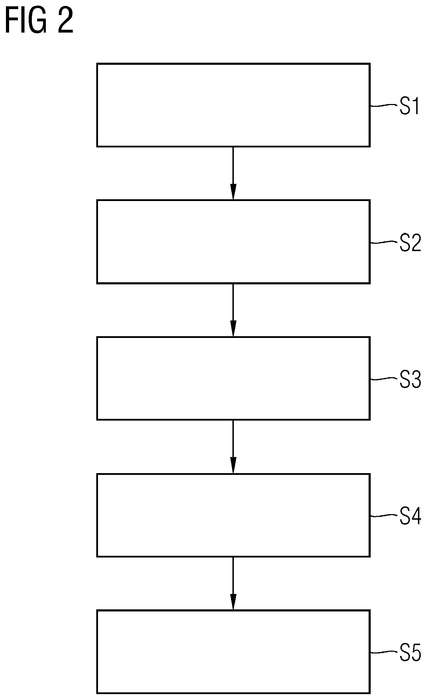

Fig. 2 zeigt ein Ablaufdiagramm des erfindungsgemäßen Verfahrens zum Erzeugen eines Schlüsselpaares eines Hardwareelements und eines zugehörigen Zertifikates, wobei das Schlüsselpaar einen privaten Schlüssel und einen öffentlichen Schlüssel aufweist, wobei der private Schlüssel nicht auslesbar ist und wobei der öffentliche Schlüssel auslesbar ist und in einer Datenbank gespeichert wird, und wobei mindestens eine erste Infrastrukturkomponente Zugriff auf die Datenbank hat.

Das Verfahren weist die Schritte in der Reihenfolge:
- Erzeugen S1 eines Schlüsselpaars auf dem Hardwareelement,
- Auslesen S2 des öffentlichen Schlüssels aus dem Hardwareelement und Abspeichern S2 in der Datenbank,
- Einbau S3 des Hardwareelements in ein technisches Gerät,
- Stellen S4 eines Zertifizierungsantrages für das technische Gerät durch die erste Infrastrukturkomponente, wobei der Zertifizierungsantrag den öffentlichen Schlüssel und Daten zu dem technischen Gerät aus einer Datenbank enthält und
- Erzeugen und/ oder Bereitstellen S5 des Zertifikats für das technische Gerät durch eine zweite Infrastrukturkomponente, wobei das Zertifikat den öffentlichen Schlüssel enthält, wobei der öffentliche Schlüssel zu dem privaten Schlüssel des Schlüsselpaars auf dem Hardwareelement gehört,
auf.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Trustcenter
- 2: Fabriknetzwerk
- 21: Fabrik-Serverraum
- 22: Fabrikhalle
- CA: Certification Authority
- D: technisches Gerät
- LRA: lokale Registration Authority
- PMDB: Produktions-Management Datenbank
- RA: Registration Authority
- Si: Verfahrensschritt mit i = [1; 5]

## Patentansprüche

1. Verfahren zum Erzeugen eines Schlüsselpaares eines Hardwareelements und eines zugehörigen Zertifikates,
**wobei** das Schlüsselpaar einen privaten Schlüssel und einen öffentlichen Schlüssel aufweist,
**wobei** der private Schlüssel nicht auslesbar ist und wobei der öffentliche Schlüssel auslesbar ist und in einer Datenbank gespeichert wird, und
**wobei** mindestens eine erste Infrastrukturkomponente Zugriff auf die Datenbank hat,
**mit den Schritten in der Reihenfolge:**
- Erzeugen (S1) eines Schlüsselpaars auf dem Hardwareelement,
- Auslesen (S2) des öffentlichen Schlüssels aus dem Hardwareelement und Abspeichern (S2) in der Datenbank,
- Einbau (S3) des Hardwareelements in ein technisches Gerät,
- Stellen (S4) eines Zertifizierungsantrages für das technische Gerät durch die erste Infrastrukturkomponente, wobei der Zertifizierungsantrag den öffentlichen Schlüssel und Daten zu dem technischen Gerät aus einer Datenbank enthält und
- Erzeugen und/ oder Bereitstellen (S5) des Zertifikats für das technische Gerät durch eine zweite Infrastrukturkomponente, wobei das Zertifikat den öffentlichen Schlüssel enthält, wobei der öffentliche Schlüssel zu dem privaten Schlüssel des Schlüsselpaars auf dem Hardwareelement gehört.

2. Verfahren nach Anspruch 1,
**wobei** die erste Infrastrukturkomponente:
- eine einer Certification Authority vorgeschaltete lokale Registration Authority und/ oder
- eine einer Certification Authority vorgeschaltete Registration Authority und/ oder
- ein Testrechner
ist.

3. Verfahren nach einem der vorherigen Ansprüche,
**wobei** die zweite Infrastrukturkomponente eine Certification Authority ist.

4. Verfahren nach einem der vorherigen Ansprüche,
wobei die Daten zu dem technischen Gerät nach Herstellung des technischen Gerätes ergänzt werden.

5. Verfahren nach einem der vorherigen Ansprüche,
**wobei** das Hardwareelement ein Sicherheitschip ist.

6. Verfahren nach einem der vorherigen Ansprüche,
**wobei** das Schlüsselpaar im Hardwareelement bereits vor Herstellung des technischen Gerätes erzeugt wird.

7. Verfahren nach einem der vorherigen Ansprüche,
**wobei** das Schlüsselpaar für ein Herstellerzertifikat des technischen Gerätes erzeugt wird.

8. Verfahren nach einem der Ansprüche 2 bis 7,
**wobei** der Zertifizierungsantrag von der Infrastrukturkomponente mittels eines Zertifikatsmanagementprotokolls an die Certification Authority übertragen wird.

9. Schlüsselverwaltungssystem **aufweisend:**
- eine Datenbank,
- ein technisches Gerät,
- ein Hardwareelement, das ein Schlüsselpaar aufweist, wobei das Schlüsselpaar einen privaten Schlüssel und einen öffentlichen Schlüssel aufweist, wobei der private Schlüssel nicht auslesbar ist und wobei der öffentliche Schlüssel auslesbar ist und in der Datenbank gespeichert wird,
- mindestens eine erste Infrastrukturkomponente, wobei die Infrastrukturkomponente Zugriff auf die Datenbank hat,
- mindestens eine zweite Infrastrukturkomponente, welche ausgebildet ist, Zertifikate für das technische Gerät zu erzeugen und bereitzustellen,
- ein Zertifizierungsantrag für das technische Gerät, wobei der Zertifizierungsantrag den öffentlichen Schlüssel des Schlüsselpaars und Daten zu dem technischen Gerät enthält und wobei der Zertifizierungsantrag von der ersten Infrastrukturkomponente erzeugt, erweitert und/ oder geprüft wird, indem die erste Infrastrukturkomponente den im Zertifizierungsantrag enthaltenen öffentlichen Schlüssel aus der Datenbank abfragt, und
- ein Zertifikat für das technische Gerät, wobei das Zertifikat durch die zweite Infrastrukturkomponente erzeugt und/ oder bereitgestellt wird, wobei das Zertifikat den öffentlichen Schlüssel enthält, wobei der öffentliche Schlüssel zu dem privaten Schlüssel des Schlüsselpaars auf dem Hardwareelement gehört,
**dadurch gekennzeichnet, dass:**
- das Schlüsselpaar vor einem Einbau des Hardwareelements in das technische Gerät erzeugt wird.

10. Schlüsselverwaltungssystem nach Anspruch 9 zur Ausführung des Verfahrens nach einem der Ansprüche 1 bis 8.
